# EUROPEAN PATENT APPLICATION

(11) **EP 4 283 643 A1**
(43) Date of publication of application: **29.11.2023**
(21) Application number: 22742202.9
(22) Date of filing: 19.01.2022
(51) Int. Cl.: H01G 11/80, H01G 11/82, H01G 9/12, H01G 9/012

(54) **ELECTROCHEMICAL ENERGY STORAGE APPARATUS**

(30) Priority: 19.01.2021 CN 202110070340
(71) Applicant: Kyocera AVX Components (Chengdu) Co., Ltd., Chengu, Sichuan 610000 (CN)
(72) Inventor: ZHAO, Fanghui, Chengdu, Sichuan 610000 (CN)
(74) Representative: dompatent von Kreisler Selting Werner - Partnerschaft von Patent- und Rechtsanwälten mbB
(86) International application number: PCT/CN2022/072839
(87) International publication number: WO 2022/156723

(57) **Abstract**

Disclosed is an electrochemical energy storage apparatus, comprising a battery cell assembly, a lead terminal, an elastic member and a potting material. The battery cell assembly can store electric energy. The lead terminal is electrically connected to the battery cell assembly. The elastic member is arranged at the top of the battery cell assembly, and is constructed to be able to hold the lead terminal. The potting material is applied to the elastic member, and can block a gap which is present between the lead terminal and the elastic member after being cured. By means of the electrochemical energy storage apparatus, it is possible to prevent an electrolyte creepage phenomenon from occurring, or to prevent moisture from entering a product.

## Description

### Technical Field

The present application generally relates to the field of electric energy storage devices, and more particularly relates to an electrochemical energy storage apparatus.

### Background Art

The following descriptions are provided to aid understanding of readers. None of the information provided or references cited is acknowledged as the prior art.

Supercapacitors, also known as electrochemical capacitors, are one type of electrochemical elements that store energy by polarizing electrolytes. The supercapacitors have the characteristics of high power density, short charging time, long service life and the like, thus being widely used as auxiliary energy sources in electric vehicles and storage systems of three smart meters and power grids.

At present, small-capacity capacitors usually adopt a wound-type rubber particle aluminum shell packaging form. In such type of capacitors, positive and negative electrodes of the capacitors are riveted with positive and negative guide pins respectively and wound into capacitor cores. The positive and negative guide pins are led out through two through holes in the rubber particles, and the rubber particles and shells are sealed by wound edges. After the rubber particles are loaded into housings of the capacitors, the housings will squeeze the rubber particles to make the rubber particles to be fitted to aluminum stems of the guide pins. Based on such cooperation manner of the rubber particles and the guide pins, it is difficult to form a complete tight fit between the rubber particles and the guide pins, and the sealing effect of the rubber particles is not good. Specifically, after lead terminals penetrate through holes of elastic members, in sections where the through holes and the lead terminals are matched with each other, the through holes and the lead terminals are partially in contact in a circumferential direction and an axial direction, and gaps are retained between other positions of the through holes and the lead terminals.

After the capacitors are used for a long time, strongly alkaline substances in the capacitor cores may leak through guide pin holes, leading to an "electrolyte creepage" phenomenon occurring in the negative electrodes. Circuit boards are easily corroded by the strongly alkaline substances spilled, leading to short circuits of the circuit boards. Meanwhile, when the capacitors are located in a high-temperature and high-humidity use environment, external moisture can easily enter products, further leading to deterioration and failure of properties of the products.

In order to solve the problem that it is difficult to better seal packaging structures in the existing capacitors, some manufacturers put capacitor products into plastic shells, and then pot glue into the plastic shells. However, after such treatment is performed, the moisture resistance effect of the capacitors cannot be effectively improved. Specifically, conventional plastic shells are difficult to form completely sealed sealing cavities, thus having no excellent high temperature resistance and high humidity resistance. Water vapor will enter the plastic shells, and further enter the products. Further, the potting glue poured into plastics will block explosion-proof valves, so that the explosion-proof valves cannot be opened, and such type of products have safety hazards.

### Summary of the Invention

One of objectives of the present disclosure is to provide an electrochemical energy storage apparatus. The electrochemical energy storage apparatus has a good packaging effect, and can prevent an electrolyte creepage phenomenon from occurring, or prevent moisture from entering a product.

The objectives of the present disclosure are achieved through the following technical solution: an electrochemical energy storage apparatus, which includes a battery cell assembly, a lead terminal, an elastic member and a potting material. The battery cell assembly can store electric energy. The lead terminal is electrically connected to the battery cell assembly. The elastic member is arranged at the top of the battery cell assembly, and is able to hold the lead terminal. The potting material is applied to the elastic member, and can block a gap which is present between the lead terminal and the elastic member after being cured.

Preferably, the potting material is formed as a potting layer poured on the elastic member.

According to the prior art, after the lead terminal penetrates through holes of the elastic member, gaps will be formed between the lead terminal and the through holes. According to the electrochemical energy storage apparatus in the above form, in some implementations, the potting material flows into the gaps and blocks the gaps in a form of pouring. In some implementations, the potting material is solidified and aggregated on the elastic member to form a potting layer with a certain thickness. The potting layer is closely fitted to the lead terminal, thereby blocking the gaps.

In some implementations, the electrochemical energy storage apparatus further includes a housing, wherein the housing is provided with a side wall forming an inner cavity, and one side of the housing is open to an outside; and the inner cavity is used for accommodating the battery cell assembly, the elastic member and the potting material. The housing can be used as a protection mechanism for the battery cell assembly and as a fixing device for the elastic member.

In some implementations, the elastic member is an elastic rubber member and is provided with through holes matched with the lead terminal.

In some implementations, the housing is provided with a plurality of inward recesses recessing inward at positions corresponding to the elastic member, so that the elastic member can be tightly fitted to the lead terminal when an external force is applied to the elastic member through at least one of the plurality of inward recesses. At least one of the plurality of inward recesses is configured to be able to abut against an upper end surface of the elastic member.

Some of the plurality of inward recesses are embedded in the elastic member at a middle position of the elastic member, so as to firmly fix the elastic member; and in addition, this part of inward recesses can deform the through holes of the elastic member to be matched with the lead terminal (aluminum stem), so as to form a first sealing mechanism for the battery cell assembly. Some others of the plurality of inward recesses abut against the upper end surface of the elastic member to achieve the purpose of fixing the elastic member.

In some implementations, at least one of the plurality of inward recesses is an annular inward recess. After the inward recesses are arranged in an annular shape, the housing can be formed as a continuous pressing surface on an entire circumference position of rubber particles. After the annular inward recesses press the rubber particles, shapes of through holes on the rubber particles will only be shrunk and deformed in equal proportion, and will not be changed into other types different from the shapes of the original through holes. For example, the original through holes are cylindrical through holes, and after the annular inward recesses squeeze the rubber particles, the through holes are changed into cylindrical through holes with a smaller diameter, rather than other types of through holes with a triangular cross section, an elliptical cross section, etc., which is more beneficial for the through holes to be more closely fitted to the lead terminal, so as to form the more favorable first sealing mechanism.

In some implementations, the housing further includes a bottom wall connected to the side wall, and the electrochemical energy storage apparatus further includes an explosion-proof valve arranged on the bottom wall. The explosion-proof valve can ensure that the battery cell assembly is depressurized immediately when the pressure reaches a certain level due to various abnormal conditions such as high temperature, high pressure and vibration. Therefore, the battery cell assembly will not undergo an explosion event due to excessive internal pressure.

In some implementations, the explosion-proof valve is a thin-walled part located at the bottom wall. Optionally, the thin-walled part is formed by recessing inward from a lower surface of the bottom wall. A form of the thin-walled part recessing inward has the characteristics of simple structure and high practicability.

In some implementations, the inner cavity of the housing is provided with a plurality of the battery cell assemblies, and the potting layer is arranged in the inner cavity and simultaneously covers the plurality of battery cell assemblies.

In some implementations, the elastic member is made of butyl rubber and/or ethylene propylene diene monomer.

In some implementations, a Shore hardness of the elastic member is 70 degree-90 degree.

In some implementations, the potting material is made of one or more of organosilicone potting glue, polyurethane potting glue, and epoxy potting glue.

In some implementations, a curing temperature of the potting material is 20°C-150°C, and a Shore hardness of the potting material after being cured is 80-100 degree.

In some implementations, the battery cell assembly includes a winding core formed by winding to butt a head end and a tail end of an electrode, and a fixing member that is arranged on an outer surface of the winding core and is able to glue the head end and the tail end. Preferably, the fixing member is an annular member. The fixing member in an annular form enables the winding core to be maintained in a cylindrical shape more stably.

In some implementations, the housing is a metal part.

The present disclosure further provides an energy storage system, and the energy storage system includes at least two foregoing electrochemical energy storage apparatuses and a connecting part for electrically connecting the electrochemical energy storage apparatuses. The connecting part is optionally arranged as a bus component, and the bus component is configured to be able to controllably switch on or off the electrochemical energy storage apparatuses.

### Brief Description of the Drawings

FIG. 1 shows a structural schematic diagram of a capacitor (electrochemical energy storage apparatus) according to an illustrative implementation.
FIG. 2 shows a schematic diagram of a position of a winding core of a battery cell assembly according to an illustrative implementation.
FIG. 3 shows a schematic diagram of a lead terminal according to an illustrative implementation.
FIG. 4 (a) shows a top view of an elastic member according to an illustrative implementation.
FIG. 4 (b) shows a section view of the elastic member according to FIG. 4 (a) in an A-A direction.
FIG. 5 shows a section view of a housing according to an illustrative implementation.
FIG. 6 shows a structural schematic diagram of an energy storage system (module) having the capacitor of FIG. 1.
FIG. 7 shows a structural schematic diagram of a capacitor (electrochemical energy storage apparatus) in comparative example 1.
FIG. 8 shows a structural schematic diagram of an energy storage system having the capacitor of FIG. 7.
FIG. 9 shows a structural schematic diagram of an energy storage system having a capacitor module of FIG. 8 and a metal housing.
FIG. 10 shows a schematic diagram of a bottom of the energy storage system as shown in FIG. 9.

### Detailed Description of Embodiments

References will now be made to various implementations, and one or more examples of the various implementations are illustrated in the drawings. The implementations are provided in the way of explaining the present invention and are not meant to limit the present invention. For example, characteristics illustrated or described as a part of one implementation can be used with another implementation to obtain yet another implementation. The present application is intended to cover these and other modifications and variations that fall within the scope and spirit of the present invention.

In the following specific descriptions, directional terms such as "upper", "lower", "inner", "outer", "longitudinal", "horizontal" and the like are used with reference to the directions described in the drawings. Components of embodiments of the present invention may be arranged in a variety of different directions, and the directional terms are used for the purpose of illustration rather than limitation.

Disclosed herein are an electrochemical energy storage apparatus and an energy storage system having the electrochemical energy storage apparatus. The electrochemical energy storage apparatus can be used in a form of a monomer, or in a form of a module composed of a variety of monomers connected in series. The electrochemical energy storage apparatus can be used in various occasions that require electric energy. The electrochemical energy storage apparatus is used as small power supply unit for driving circuit units to work in some occasions; and in other occasions, the electrochemical energy storage apparatus is used as a large power supply unit for driving power mechanisms such as vehicles to move. In the following drawings and specification, the electrochemical energy storage apparatus is schematically illustrated by taking a "cylindrical capacitor" as an example. It should be noted that based on the inventive concept of the present disclosure, those skilled in the art may understand that the electrochemical energy storage apparatus can also be an electrochemical energy storage apparatus in a form of a hexahedron or in other conventional forms, and other types of electrochemical energy storage apparatuses will not be described in detail below.

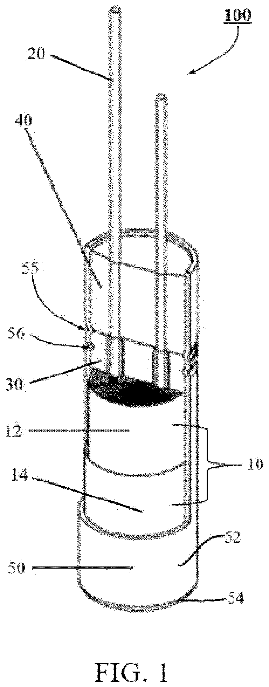

Referring to FIG. 1, a capacitor 100 is composed of a battery cell assembly 10, a lead terminal 20, an elastic member 30, a potting material 40 and a housing 50, etc. In FIG. 1, in order to facilitate the display of an internal structure of the capacitor 100, only roughly half of the structures of the housing 50, the elastic member 30, the potting material 40 and the like is shown, and half not shown roughly has the same structural form as shown in FIG. 1.

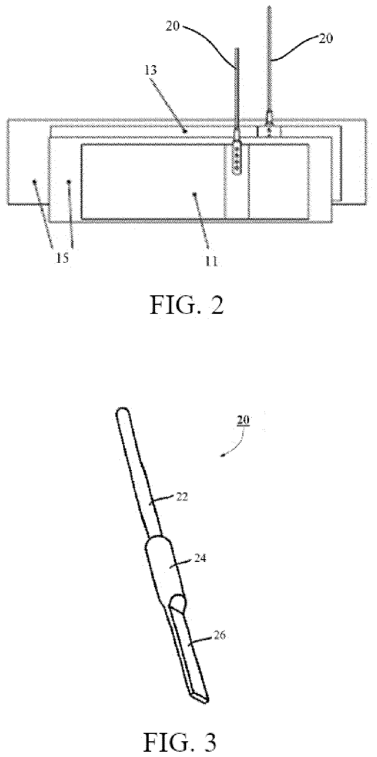

The battery cell assembly 10 of the capacitor 100 is used for storing electric energy. According to some implementations of the present disclosure, the battery cell assembly 10 includes a winding core 12 and a fixing member 14 surrounding the winding core 12. Referring to FIG. 1 and FIG. 2, the winding core 12 of the battery cell assembly 10 is formed by winding a positive sheet 13, an insulation sheet 15, a negative sheet 11 and an insulation sheet 15 which are well-known and laminated and butting the head end and the tail end. The positive sheet 13, the insulation sheets 15 and the negative sheet 11 which are wound form a cylindrical member with butted head and tail ends. In the implementation as shown in FIG. 1, one positive sheet 13 and one negative sheet 11 are arranged respectively, and alternatively, the various sheets 11, 13 and 15 are optionally arranged to be more than one according to a lamination sequence of the positive sheet 13, the insulation sheet 15, the negative sheet 11 and the insulation sheet 15, thereby forming a multi-electrode form. For example, referring to the above sequence, the numbers of the positive sheets 13 and the negative sheets 11 may be arranged, to be 2, respectively.

Referring to FIG. 1, in the present disclosure, an outer peripheral wall of the winding core 12 is provided with a fixing member 14 able to glue head ends and tail ends of the sheets. The fixing member 14 is set to be an adhesive tape able to maintain good viscosity in a relatively large temperature range, for example, in a range of -40°C-80°C. In the implementation of FIG. 1, the fixing member 14 (adhesive tape) is an annular member. The fixing member 14 with connected head and tail ends is able to maintain the winding core 12 in the cylindrical shape as shown in FIG. 1 more stably.

Referring to FIG. 3, the lead terminal 20 inserted into the battery cell assembly 10 (specifically, between the positive sheet 13 and the insulation sheet 15, and between the negative sheet 11 and the insulation sheet 15) plays a role in transmitting electric energy. The lead terminal 20 is composed of a lead section 22, an aluminum stem section 24 and an aluminum tongue section 26. The lead section 22 is used as an interface for the capacitor 100 and generally has a circular cross section. The aluminum stem section 24 is used for being matched with through holes 32 in the elastic member 30 described below, so as to make the lead terminal 20 firmly fixed. The aluminum stem section 24 generally has a diameter larger than that of the lead section 22. The aluminum tongue section 26 is inserted into the battery cell assembly 10. Specifically, the aluminum tongue segment 26 of the positive lead terminal 20 is inserted between the positive sheet 13 and the insulation sheet 15 of the battery cell assembly 10, and the negative lead terminal 20 is inserted between the negative sheet 11 and the insulation sheet 15 of the battery cell assembly 10. The aluminum tongue section 26 is in a flat shape as shown in FIG. 3, which is transitioned smoothly from the aluminum stem section 24 and has a width equivalent to the diameter of the aluminum tongue section 26.

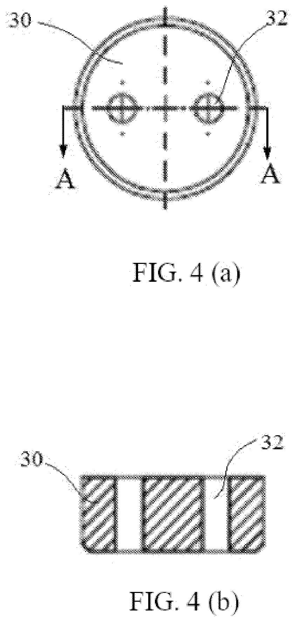

Referring to FIG. 1, FIG. 4 (a) and FIG. 4 (b), the elastic member 30 is arranged at the top of the battery cell assembly 10, and is constructed to be able to hold the lead terminal 20. Specifically, the elastic member 30 is an elastic rubber member (rubber particle layer) made of butyl rubber and/or ethylene propylene diene monomer, which is provided with a plurality of through holes 32 that are matched with the lead terminal 20 in number and matched with the aluminum stem section 24 in shape along an axis. The diameter of the through holes 32 is slightly larger than that of the aluminum tongue section 26, which is convenient for installers to enable the lead terminal 20 to penetrate through the elastic member 30.

According to the present disclosure, a Shore hardness of the elastic member is set to be 70 degree-90 degree.

Referring to FIG. 1, the potting material 40 applied to the elastic member 30 is used for blocking gaps between the through holes 32 of the elastic member 30 and the aluminum stem section 24. According to the present disclosure, the potting material 40 is made of one or more of organosilicone potting glue, polyurethane potting glue, and epoxy potting glue. A curing temperature of the potting material is 20°C-150°C, and a Shore hardness of the potting material after being cured is 80 degree-100 degree. In some implementations, the potting material 40 flows into the above gaps in a form of pouring and blocks the gaps. In some implementations, the potting material 40 is solidified and aggregated on the elastic member 30 to form a potting layer 40 with a certain thickness. The potting layer 40 is closely fitted to the lead terminal 20, thereby blocking the gaps.

In the implementation of FIG. 1, a construction person pours the liquid potting material 40 onto the elastic member 30 when conducting production operation, and the potting material 40 is cured on the elastic member 30 under a shaping action of the housing 50 or other shaping plates to form a thick-walled potting layer 40. The potting layer 40 is closely fitted to the lead section 22 and the aluminum stem section 24 of the lead terminal 20, so as to block the gaps which are present between the lead terminal 20 and the elastic member 30, thereby forming a sealing mechanism (second sealing mechanism) for blocking alkaline substances, moisture and the like from entering the battery cell assembly 10. Since the potting material 40 in the initial state is in a liquid state, when pouring operation is conducted, a part of the potting material 40 flows into the above gaps to form a first sealing mechanism for blocking the gaps.

It should be understood that it is a preferred implementation that the potting material 40 is cured on the elastic member 30 to form the thick-walled potting layer 40. Therefore, the potting layer 40 in a thick-walled form can form a long path between the battery cell assembly 10 and the outside, which blocks moisture or alkaline substances from circulating through internal and external components of the capacitor 100.

According to the present disclosure, the potting layer 40 is set according to a use scene of the capacitor 100, for example, set according to vibration conditions, temperature conditions and humidity conditions. Generally, a thickness of the potting layer 40 is set to be in a range of 1-10 mm, for example 3 mm, 5 mm, etc.

In addition, the potting material 40 may not necessarily be formed as the potting layer 40 with a relatively large thickness as shown in FIG. 1. Specifically, a glue gun may be attached to the tops of the through holes 32 of the elastic member 30 by a construction person, and then the potting material 40 is continuously poured into the gaps between the through holes 32 and the lead terminal 20 under high pressure. The liquid potting material 40 is automatically filled into gaps at various positions under a pushing action of high pressure. Under the condition of a relatively good use environment, a sealing mechanism in such form can also achieve the purpose of good blocking.

Continuously referring to FIG. 1, the capacitor 100 may be further optionally provided with a housing 50, wherein the housing 50 is provided with a side wall 52 and a bottom wall 34 connected to the side wall 52. The housing 50 is internally provided with an inner cavity for accommodating the battery cell assembly 10, the elastic member 30 and the potting material 40. A cross section size of the inner cavity is roughly equivalent to a contact size of the elastic member 30. When the elastic member 30 is assembled to the inner cavity, the inner cavity is basically fitted to an outer surface of the elastic member 30. The housing 50 has an open end located at an upper portion, and the battery cell assembly 10 and the like can enter the inner cavity of the housing 50 through the open end. It should be noted that the housing 50 in the present disclosure is used as a protection mechanism for protecting the battery cell assembly 10 of the single capacitor 100, and does not belong to a necessary part of the capacitor 100. For example, in some implementations of a module having a plurality of capacitors 100 connected in series, the module is provided with a frame-type support structure, and each capacitor monomer is fixed in each spacing groove of the support structure.

In the case that the housing 50 is arranged, as shown in FIG. 1, the housing 50 is preferably provided with a plurality of inward recesses 55, 56 recessing inward at positions corresponding to the elastic member 30. The inward recesses 55, 56 are distributed sequentially in a longitudinal direction (axial direction) of the housing 50. In the implementation as shown in FIG. 1, the housing 50 is provided with 2 inward recesses 55, 56, and the inward recesses 55, 56 are each formed as annular inward recess 55, 56. Referring to directions of FIG. 1, the inward recess 55 located at an upper portion abuts against the upper end surface of the elastic member 30, and the inward recess 56 located at a lower portion corresponds to the middle position of the elastic member 30. After the elastic member 30 is installed on the housing 50, the inward recess 56 located at the lower portion is embedded in and squeezes the elastic member 30.

The advantages of arranging the inward recesses 55, 56 in the annular form are that the inward recess 55 located at the upper portion can prevent the elastic member 30 from deflecting at any angle relative to the longitudinal direction of the housing 50, and reduce the risk that the elastic member 30 moves upward in the longitudinal direction of the housing 50. The inward recess 56 located at the lower portion enables the housing 50 to be able to form a continuous pressing surface on an entire circumference position of rubber particles. After the annular inward recesses 55, 56 press the rubber particles, through holes 32 in the rubber particles will only be shrunk and deformed in equal proportion, and will not be changed into other types different from shapes of the original through holes 32. For example, the original through holes 32 are cylindrical through holes 32, and after the annular inward recesses 56 squeeze the rubber particles, the through holes 32 are changed into cylindrical through holes 32 with a smaller diameter, rather than other types of through holes 32 with a triangular cross section, an elliptical cross section, etc., which is more beneficial for the through holes 32 to be more closely fitted to the lead terminal 20, so as to form the more favorable first sealing mechanism.

It should be understood that the inward recesses 55, 56 may also be alternatively arranged in a segmented form spaced in the circumferential direction.

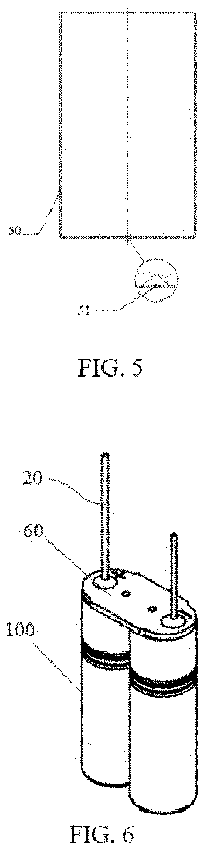

Referring to FIG. 5, preferably, the bottom wall 34 of the capacitor 100 is provided with an explosion-proof valve 51. In some implementations, the explosion-proof valve 51 is optionally a thin-walled part located at the bottom wall 34. The thin-walled part is formed by recessing inward from a lower surface of the bottom wall 34. The explosion-proof valve 51 formed by recessing has a triangular cross section facing a vertex angle of the battery cell assembly 10. According to the present disclosure, the explosion-proof valve 51 can ensure that the battery cell assembly 10 is depressurized immediately when the pressure reaches a certain level due to various abnormal conditions such as high temperature, high pressure and vibration. Therefore, the battery cell assembly 10 will not undergo an explosion event due to excessive internal pressure.

As mentioned above, the monomer type capacitor 100 as shown in FIG. 1 to FIG. 5 may be connected in series to form an energy storage system in the form of a module. Specifically, referring to FIG. 6, the energy storage system may be composed of a connecting part 60 for electrically connecting the capacitors 100 and at least two of the capacitors 100. In the present disclosure, the connecting part 60 is arranged as a bus component, and the bus component is configured to be able to controllably switch on or off the capacitors 100, thereby achieving the purpose of intelligently switching on or off the energy storage system. The bus component may be, for example, a printed circuit board (PCB) with a circuit system. After the system controls a corresponding circuit to switch on or off, the capacitors 100 connected by the bus component are thus switched on or off. It should be understood that the connecting part 60 is not limited to the bus component, and may be a wire or other conductive materials.

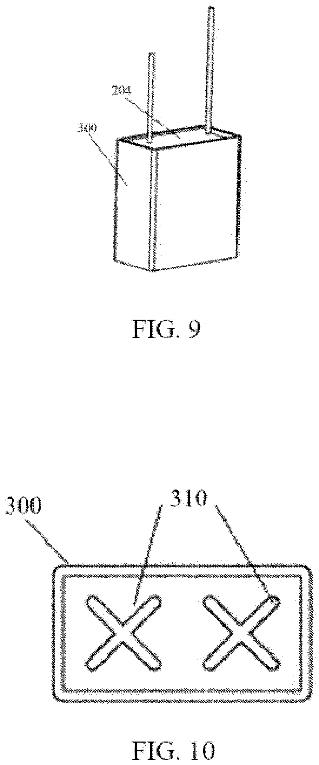

In addition, according to the above inventive concept, the present disclosure further relates to an implementation in which the battery cell assembly 10 and the potting layer 40 do not correspond to each other one by one. Specifically, as shown in FIG. 9, a metal frame 300 (which may be regarded as a housing of the capacitor 100) of the energy storage system simultaneously accommodates a plurality of the capacitors 100 and a potting layer 204 covering the capacitors 100 at the same time. The potting layer 204 is obtained by pouring the potting material and performing curing after each capacitor 100 is placed on the metal frame 300. It may be understood that in this implementation, the interior of the housing 50 of the monomer of the capacitor 100 may not be internally provided with the potting layer 40 as shown in FIG. 1 to FIG. 5.

Characteristics are described below according to the capacitor 100 (electrochemical energy storage apparatus) of the present disclosure and comparative examples.

### Embodiment

A size of a capacitor 100 in the present embodiment is set to Φ8*12, and a rated voltage is set to 2.7 V. Inward recesses 55, 56 are set in a form of two inward recesses 55, 56 as shown in FIG. 1 and FIG. 6. A potting layer 40 in a layered form is arranged on an elastic member 30, and a thickness (in a longitudinal direction) of the potting layer 40 is 2.5 times a thickness of the elastic member 30. An explosion-proof valve 51 is shown as FIG. 5. A material adopted by the potting layer 40 is epoxy potting glue. A module is composed of two capacitors 100 welded to a PCB. Three samples are provided in the embodiment, which are made by a same process. The 5.4 V module is formed by the two capacitors 100 connected in series. The module is not provided with an outer frame for accommodating the two capacitors 100.

### Comparative Example 1

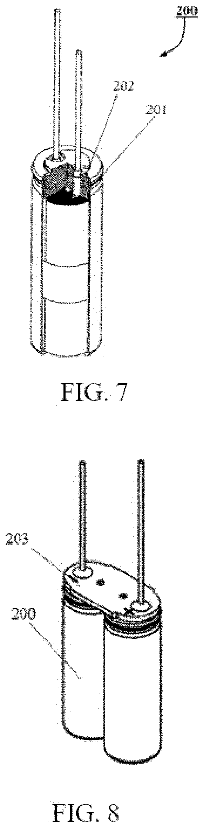

A size of a capacitor 100 in the comparative example 1 is also set to Φ8*12, and a rated voltage is set to 2.7 V. Inward recesses 55, 56 are set in a form of single concave part 201 as shown in FIG. 7. The top of an elastic member 30 is blocked by a wound edge 202, meanwhile, a potting layer 40 in a layered form is not arranged, and a potting material 40 is not poured into the elastic member 30. An explosion-proof valve 51 is shown as FIG. 5. A module is also composed of two capacitors 200 welded to a PCB. Three samples are provided in the embodiment, which are made by a same process.

For various embodiments and comparative examples, an initial capacity for a test is recorded as C₀ (F), and an initial alternating current internal resistance for the test is recorded as ESR_{AC0} (mΩ) respectively; and meanwhile, the samples are placed at a temperature of 85°C, a humidity of 85% and a constant voltage of 5.4 V, and the service life is tested. Specifically, for various embodiments and comparative examples, the capacity C (F) and the alternating current internal resistance ESR_{AC} (mΩ) are tested at 500 h (hour) and 1000 h (hour), respectively, and the capacity change ΔC/C₀ and the internal resistance change ESR_{AC}/ESR_{AC0} are calculated, wherein ΔC=C-C₀. Data are summarized in Table 1 below.

**Table 1**

| | | 0 h | | 500 h | | | | 1000 h | | | |
|---|---|---|---|---|---|---|---|---|---|---|---|
| | | C₀ (F) | ESR_{ΛC} 0 (mS2) | C (F) | ΔC/C₀ | ESR_{ΛC} (mS2) | ESR_{ΛC}/ ESR_{ΛC0} | C (F) | ΔC/C₀ | ESR_{ΛC} (mS2) | ESR_{ΛC}/ ESR_{ΛC0} |
| Embodiment | 1 | 0.71 | 370 | 0.60 | -15.49 | 744 | 2.01 | 0.5 1 | -28.17 | 1080 | 2.92 |
| | 2 | 0.74 | 366 | 0.62 | -16.21 | 730 | 1.99 | 0.5 2 | -29.73 | 1010 | 2.76 |
| | 3 | 0.72 | 358 | 0.60 | -16.67 | 758 | 2.12 | 0.5 3 | -26.39 | 1106 | 3.09 |
| Comparative Example 1 | 1 | 0.73 | 350 | 0.49 | -32.88 | 1480 | 4.23 | | | | |
| | 2 | 0.70 | 386 | 0.46 | -34.29 | 1570 | 4.07 | | | | |
| | 3 | 0.72 | 398 | 0.47 | -34.72 | 1692 | 4.25 | | | | |

It can be seen from Table 1 above that the capacity change of various samples in the comparative example 1 is greater than 30% or the internal resistance change is greater than 3 times the initial value after 500 hours, so that the samples are changed into a failure state. Various samples in the embodiment maintain good electric energy storage ability.

### Comparative Example 2

As shown in FIG. 9 and FIG. 10, in the comparative example 2, a module is provided with two capacitor monomers 200 as shown in the comparative example 1, a PCB 203 for connecting the capacitor monomers 200 and an additional metal frame 300 for simultaneously accommodating the two capacitor monomers 200. The metal frame 300 is provided with an X-shaped hole 310 as shown in FIG. 10 at a position corresponding to an explosion-proof valve 51 on a bottom wall of each capacitor monomer 200.

Further, an explosion-proof test is carried out for various embodiments and comparative examples. Data show that the explosion-proof valve 51 in each test example can be opened normally, while the explosion-proof valve 51 in the comparative example 2 cannot be opened normally, and the capacitor 100 can only be exploded open above an elastic member 30. An obvious sound is made when an explosion occurs at the position of the elastic member 30. It can be seen through further analysis that after the metal frame 300 is provided, the back pressure at the position of the explosion-proof valve 51 will be increased significantly, and thus effects of the explosion-proof valve 51 are weakened.

With respect to the use of substantially any plural and/or singular terms herein, those skilled in the art may convert a plural into a singular and/or convert a singular into a plural according to the context and/or application. Various singular/plural substitutions may be explicitly set forth herein for the sake of clarity.

It will be understood by those skilled in the art that, in general, terms used herein, and especially in the appended claims (for example, bodies of the appended claims) are generally intended to be used as "open-ended" terms (for example, the term " include" shall be construed as "include but not limited to", the term "have" shall be construed as "at least have", etc.). It will be further understood by those skilled in the art that if there is an intention to introduce a specific number of claim recitations, such intention will be explicitly recited in the claims, and such intention is not present in the absence of such recitations. For example, in order to aid understanding, the following appended claims may contain use of the introductory phrases "at least one" and "one or more" to introduce the claim recitations. However, the use of such phrases should not be construed to imply that a claim recitation introduced by an indefinite article (a referent without an indication of quantity) limits any particular claim containing the introduced claim recitation to an invention containing only one such recitation, even though the same claim includes the introductory phrase "one or more" or "at least one" and an indefinite article (for example, a referent without an indication of quantity should generally be construed as "at least one" or "one or more"); and definite articles for introducing claim recitations are also used in the same manner. Additionally, even though a specific number of claim recitations introduced is expressly stated, those skilled in the art shall also recognize that such statement should generally be construed to mean at least the stated quantity (for example, in the absence of other modifiers, simple statement of "two recitations" usually means at least two recitations, or two or more recitations). It will be further understood by those skilled in the art that, in fact, any contradictory conjunction and/or phrase that presents two or more alternative terms, whether in the specification, claims, or drawings, should be understood as considering the possibility of including one of these terms, any one of these terms, or two of these terms.

The foregoing descriptions of the illustrative implementations have been presented for the purposes of illustration and description. It is not intended to be exhaustive or limiting with respect to precise forms disclosed, and modifications and variations are possible according to the above guidance or may be acquired from practice of the disclosed implementations. The scope of the present invention is intended to be defined by the appended claims and equivalent solutions thereof.

Description of callouts in the drawings:
Capacitor, electrochemical energy storage apparatus: 100, 200.
Metal frame: 300.
Battery cell assembly: 10.
Lead terminal: 20.
Elastic member: 30.
Potting material, potting layer: 40, 204.
Housing: 50.
Connecting part (bus component, PCB): 60.
Negative sheet: 11.
Winding core: 12.
Positive sheet: 13.
Fixing member: 14.
Insulation sheet: 15.
Lead section: 22.
Aluminum stem section: 24.
Aluminum tongue section: 26.
Through hole: 32.
Explosion-proof valve: 51.
Side wall: 52.
Bottom wall: 34.
Inward recess: 55, 56, 201.
Wound edge: 202.
X-shaped hole: 310.

## Claims

1. An electrochemical energy storage apparatus (100), the electrochemical energy storage apparatus (100) comprising:
a battery cell assembly (10), wherein the battery cell assembly (10) is able to store electric energy;
a lead terminal (20), wherein the lead terminal (20) is electrically connected to the battery cell assembly (10);
an elastic member (30), wherein the elastic member (30) is arranged at the top of the battery cell assembly (10) and is able to hold the lead terminal (20); and
a potting material, wherein the potting material is applied to the elastic member (30) and is able to block gaps present between the lead terminal (20) and the elastic member (30) after being cured.

2. The electrochemical energy storage apparatus (100) according to Claim 1, wherein the electrochemical energy storage apparatus (100) further comprises a housing (50), wherein the housing (50) has a side wall (52) forming an inner cavity, and one side of the housing (50) is open to an outside; and the inner cavity is used for accommodating the battery cell assembly (10), the elastic member (30) and the potting material.

3. The electrochemical energy storage apparatus (100) according to Claim 2, wherein the potting material is formed as a potting layer (40) poured on the elastic member (30).

4. The electrochemical energy storage apparatus (100) according to Claim 3, wherein the elastic member (30) is an elastic rubber member and is provided with through holes (32) matched with the lead terminal (20).

5. The electrochemical energy storage apparatus (100) according to Claim 4, wherein the housing (50) is provided with a plurality of inward recesses (55, 56) recessing inward at positions corresponding to the elastic member (30), so that the elastic member (30) is able to be tightly fitted to the lead terminal (20) when an external force is applied to the elastic member (30) through at least one of the plurality of inward recesses (55, 56).

6. The electrochemical energy storage apparatus (100) according to Claim 5, wherein at least one of the plurality of inward recesses (55, 56) is able to abut against an upper end surface of the elastic member (30).

7. The electrochemical energy storage apparatus (100) according to Claim 4 or 5, wherein at least one of the plurality of inward recesses (55, 56) is annular inward recesses (55, 56).

8. The electrochemical energy storage apparatus (100) according to any one of Claims 1-6, wherein the housing (50) further comprises a bottom wall (34) connected to the side wall (52), and the electrochemical energy storage apparatus (100) further comprises an explosion-proof valve (51) arranged on the bottom wall (34).

9. The electrochemical energy storage apparatus (100) according to Claim 8, wherein the explosion-proof valve (51) is a thin-walled part located at the bottom wall (34).

10. The electrochemical energy storage apparatus (100) according to Claim 9, wherein the thin-walled part is formed by recessing inward from a lower surface of the bottom wall (34).

11. The electrochemical energy storage apparatus (100) according to any one of Claims 3-6, wherein the inner cavity of the housing (50) is provided with a plurality of the battery cell assemblies (10), and the potting layer (40) is arranged in the inner cavity and simultaneously covers the plurality of the battery cell assemblies (10).

12. The electrochemical energy storage apparatus (100) according to any one of Claims 1-6, wherein the elastic member (30) is made of butyl rubber and/or ethylene propylene diene monomer.

13. The electrochemical energy storage apparatus (100) according to any one of Claims 1-6, wherein a Shore hardness of the elastic member (30) is 70 degree-90 degree.

14. The electrochemical energy storage apparatus (100) according to any one of Claims 1-6, wherein the potting material is made of one or more of organosilicone potting glue, polyurethane potting glue, and epoxy potting glue.

15. The electrochemical energy storage apparatus (100) according to any one of Claims 1-6, wherein a curing temperature of the potting material is 20°C-150°C, and a Shore hardness of the potting material after being cured is 80 degree-100 degree.

16. The electrochemical energy storage apparatus (100) according to Claim 1, wherein the battery core assembly (10) comprises a winding core (12) formed by winding to butt a head end and a tail end of an electrode, and a fixing member (14) that is arranged on an outer surface of the winding core (12) and is able to glue the head end and the tail end.

17. The electrochemical energy storage apparatus (100) according to Claim 16, wherein the fixing member (14) is an annular member.

18. The electrochemical energy storage apparatus (100) according to Claim 16, wherein the housing (50) is a metal part.

19. An energy storage system, **characterized in that** the energy storage system comprises:
at least two electrochemical energy storage apparatuses (100) according to Claims 1-18; and
a connecting part (60), wherein the connecting part (60) is used for electrically connecting the electrochemical energy storage apparatuses (100).

20. The energy storage system according to Claim 19, wherein the connecting part (60) is a bus component, and the bus component is configured to be able to controllably switch on or off the electrochemical energy storage apparatuses (100).
